# EUROPEAN PATENT APPLICATION

(11) **EP 3 860 233 A1**
(43) Date of publication of application: **04.08.2021**
(21) Application number: 18934755.2
(22) Date of filing: 26.09.2018
(51) Int. Cl.: H04W 56/00, H04B 17/30, H04W 88/02

(54) **USER EQUIPMENT**

(71) Applicant: NTT DOCOMO, INC., Chiyoda-ku, Tokyo 100-6150 (JP)
(72) Inventor: FUJIMURA Naoki, Tokyo 100-6150 (JP); KAKISHIMA Yuichi, Tokyo 100-6150 (JP)
(74) Representative: Hoffmann Eitle
(86) International application number: PCT/JP2018/035748
(87) International publication number: WO 2020/065779

(57) **Abstract**

UE (200) includes a receiving unit (220) that receives a predetermined reference signal and a control unit (230) that performs quality monitoring of a radio link based on the reference signal. The control unit (230) determines a synchronous state of the radio link based on a first error rate threshold value or a second error rate threshold value, and even if the first error rate threshold value is changed to the second error rate threshold value at a predetermined timing, applies an evaluation period corresponding to the first error rate threshold value.

## Description

### TECHNICAL FIELD

The present invention relates to a user equipment.

### BACKGROUND ART

3rd Generation Partnership Project (3GPP) specifies Long Term Evolution (LTE), and with the aim of further speeding, specifies LTE-Advanced (hereinbelow, the LTE includes the LTE-Advanced). Moreover, in the 3GPP, further, specification of a succeeding system of the LTE called 5G New Radio (NR) or Next Generation (NG) and the like is being considered.

Like in the LTE, even in the NR, in Radio Link Monitoring (RLM), which is a function to monitor the quality of a radio link, BLER (block error rate) pair is defined as a threshold for judging out-of-sync (OOS: out of synchronization) and in-sync (IS: a state of synchronization or where synchronization has been established) of a radio link.

In the NR, moreover, in order to deal with services such as VoIP (Voice over IP), the BLER pair can be set from the network side, and the use of two BLER pairs with different values is being studied (see Non-Patent Document 1).

A user equipment (User Equipment, UE) estimates the BLER by using RLM-RS (Reference Signal) set for the RLM in the evaluation period for determining whether it is the OOS or the IS.

### PRIOR ART DOCUMENT

### NON-PATENT DOCUMENT

Non-Patent Document 1: 3GPP TS 38.133 V15.2.0 3rd Generation Partnership Project; Technical Specification Group Radio Access Network; NR; Requirements for support of radio resource management (Release 15), 3GPP, June 2018

### SUMMARY OF THE INVENTION

However, the following problems arise when changing, according to a service or the like, a plurality of the BLER pairs mentioned above.

Specifically, the possibility that the above-mentioned evaluation period is different for each BLER pair is high; however, the operation of the UE when the BLER pair is changed during the evaluation period is not stipulated.

For example, when the BLER pair is changed during the evaluation period by a message (RRC Reconfiguration) of a radio resource control layer, and if the evaluation for the RLM is performed again from a timing at which RRC layer is reconstructed, a quality monitoring time of the radio link will be too long. For this reason, detection of a radio link failure (RLF) is delayed, or the like, leading to degradation of quality evaluation performance of the radio link.

The present invention has been made in view of the above discussion. One object of the present invention is to provide a user equipment capable of maintaining quality evaluation performance of a radio link even when a plurality of the BLER pairs used for judging a synchronous state of the radio link are dynamically changed during the operation.

A user equipment according to one aspect of the present invention includes a receiving unit (receiving unit 220) that receives a reference signal; and a control unit (control unit 230) that performs quality monitoring of a radio link based on the reference signal. The control unit determines a synchronous state of the radio link based on first error rate control information or second error rate control information, and even if the first error rate control information is changed to the second error rate control information at a predetermined timing, applies an evaluation period corresponding to the first error rate control information.

A user equipment according to another aspect of the present invention includes a receiving unit that receives a predetermined reference signal; and a control unit that performs quality monitoring of a radio link based on the reference signal. The control unit determines a synchronous state of the radio link based on first error rate control information or second error rate control information, and when the first error rate control information is changed to the second error rate control information at a predetermined timing, applies an evaluation period corresponding to the second error rate control information.

A user equipment according to still another aspect of the present invention includes a receiving unit that receives a predetermined reference signal; and a control unit that performs quality monitoring of a radio link based on the reference signal. The control unit determines a synchronous state of the radio link based on first error rate control information or second error rate control information, and when the first error rate control information is changed to the second error rate control information at a predetermined timing, cancels a notification of the synchronous state of the radio link.

### BREIF DESCRIPTION OF DRAWINGS

FIG. 1 is an overall schematic configuration diagram of a radio communication system 10.
FIG. 2 is a functional block diagram of UE 200.
FIG. 3 is a diagram showing a flowchart of a synchronous state determination operation of a radio link based on RLM.
FIG. 4 is a diagram showing a configuration example of a BLER pair.
FIG. 5 is a diagram showing an example of an evaluation period for determining whether it is OOS or IS.
FIG. 6 is a diagram showing an example of a notation of a configuration (BLER pair), BLER corresponding to OOS/IS, the evaluation period, and SNR.
FIG. 7 is a diagram showing RLM operation sequence (Operation Example 2-1) performed by the UE 200.
FIG. 8 is a diagram showing another RLM operation sequence (Operation Example 2-2) performed by the UE 200.
FIG. 9 is a diagram showing still another RLM operation sequence (Operation Example 2-3) performed by the UE 200.
FIG. 10 is a diagram showing still another RLM operation sequence (Operation Example 2-4) performed by the UE 200.
FIG. 11 is a diagram showing still another RLM operation sequence (Operation Example 3) performed by the UE 200.
FIG. 12 is a diagram showing an example of a hardware configuration of the UE 200.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Schematic Configuration of Radio Communication System

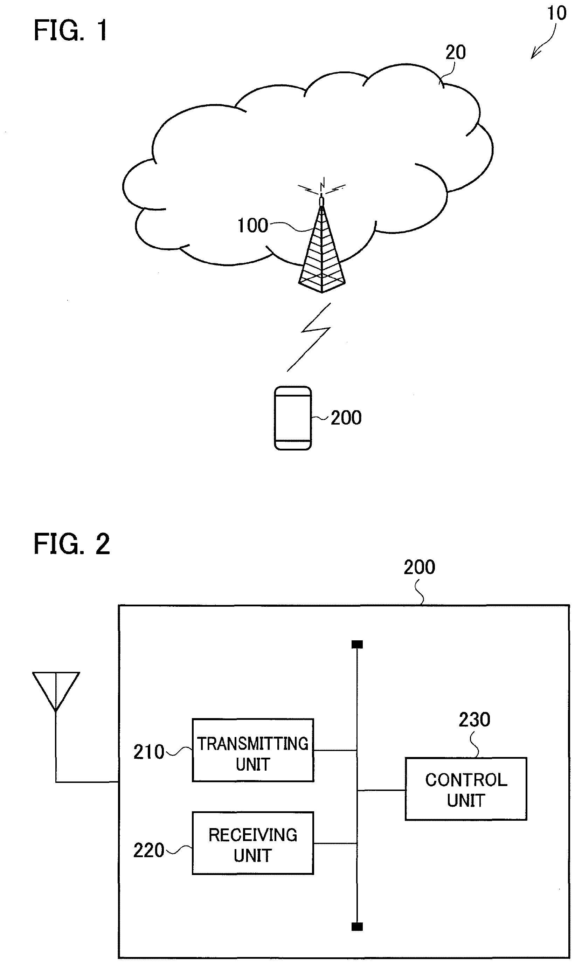

FIG. 1 is an overall schematic configuration diagram of a radio communication system 10 according to the present embodiment. The radio communication system 10 is a radio communication system according to 5G New Radio (NR) . The radio communication system 10 includes Next Generation-Radio Access Network 20 (hereinafter, "NG-RAN 20") and a user equipment 200 (hereinafter, "UE 200").

The NG-RAN 20 includes a radio base station 100 (hereinafter, "gNB 100"). A concrete configuration of the radio communication system 10, including the number of the gNBs and the UEs, is not limited to the example shown in FIG. 1.

The NG-RAN 20 actually includes a plurality of NG-RAN Nodes, in particular, the gNBs (or ng-eNB). Also, the NG-RAN 20 is connected to a core network (5GC, not shown) according to the 5G.

The gNB 100 is a radio base station according to the 5G. The gNB 100 performs a radio communication with the UE 200 according to the 5G. The gNB 100 and the UE 200 can handle, by controlling a radio signal transmitted from a plurality of antenna elements, Massive MIMO that generates a beam with a higher directivity, carrier aggregation (CA) that uses a plurality of component carriers (CC), dual connectivity (DC) in which a component carrier is transmitted simultaneously between a plurality of NG-RAN Nodes and the UE, and the like.

### (2) Functional Block Configuration of Radio Communication System

A functional block configuration of the radio communication system 10 will be explained below. Specifically, a functional block configuration of the UE 200 will be explained here.

FIG. 2 is a functional block diagram of the UE 200. As shown in FIG. 2, the UE 200 includes a transmitting unit 210, a receiving unit 220, and a control unit 230.

The transmitting unit 210 transmits an uplink signal (UL signal) according to the NR.

The receiving unit 220 receives a downlink signal (DL signal) according to the NR. Particularly, in the present embodiment, the receiving unit 220 receives a reference signal (RS) .

Specifically, the receiving unit 220 receives Radio Link Monitoring-RS (RLM-RS), Channel State Information-RS (CSI-RS), and the like.

The control unit 230 performs control on the UL signal transmitted by the transmitting unit 210 and the DL signal received by the receiving unit 220.

Particularly, in the present embodiment, the control unit 230 performs the radio link, specifically, quality monitoring of the DL, based on the reference signal received by the receiving unit 220. Specifically, the control unit 230 determines, in accordance with Radio Link Monitoring (RLM), which is a function to monitor quality of the radio link, whether the radio link is out-of-sync (OOS: out of synchronization) or in-sync (IS: a state of synchronization or where synchronization has been established).

More specifically, the control unit 230 determines a synchronous state of the radio link, that is, whether it is the OOS or the IS, by using the BLER pair. The BLER pair is a pair of a lower limit value and an upper limit value of the BLER (block error rate).

The control unit 230 estimates, in the evaluation period for determining whether it is the OOS or the IS, the SNR (Signal to Noise Ratio) by using the RLM-RS set for the RLM.

In the radio communication system 10, two BLER pairs are used. The first BLER pair is similar to that in the LTE, that is, BLER (BLERₒᵤₜ) for OOS is 10% and BLER for IS (BLERin) is 2%. Hereinafter, this BLER pair will be called Configuration 0.

The second BLER pair is for various services such as the VoIP (Voice over IP) and is set to a value (for example, BLERₒᵤₜ = 15% and BLERᵢₙ = 3%) higher (loose) than the first BLER pair. This BLER pair will be called Configuration 1. Details of the Configuration 0 and the Configuration 1 will be explained later.

The Configuration 0 and the Configuration 1 correspond to first error rate control information or second error rate control information, and are constituted by the BLER pairs. However, the Configuration 0 and the Configuration 1 do not necessarily need to be the pair of the BLERs, and can be constituted by only the BLER for OOS (BLERₒᵤₜ) or the BLER for IS (BLERᵢₙ). The first error rate control information or the second error rate control information can be expressed as an index value such as 0, 1, or the like.

The control unit 230 determines the synchronous state of the radio link based on one of these two BLER pairs.

Even if the Configuration 0 (for example, the first error rate control information) is changed to the Configuration 1 (for example, the second error rate control information) at a predetermined timing, the control unit 230 can apply an evaluation period corresponding to the Configuration 0.

Note that, the predetermined timing can be the evaluation period corresponding to the Configuration 0 (first error rate control information). That is, the predetermined timing is within the evaluation period corresponding to the configuration before the change.

Further, when the Configuration 0 (for example, the first error rate control information) is changed to the Configuration 1 (for example, the second error rate control information) at a predetermined timing, the control unit 230 can apply an evaluation period corresponding to the Configuration 1.

Furthermore, when the Configuration 0 (for example, the first error rate control information) is changed to the Configuration 1 (for example, the second error rate control information) at a predetermined timing, the control unit 230 can cancel notifying of the synchronous state of the radio link. Specifically, the control unit 230 cancels notifying of the synchronous state indication (indication) from a lower layer (physical layer (PHY), radio link control layer (RLC), or the like) to an upper layer (radio resource control layer (RRC), Non-Access Stratum (NAS), or the like).

### (3) Operation of Radio Communication System

An operation of the radio communication system 10 will be explained below. Specifically, an operation relating to the RLM of the UE 200 will be explained.

### (3.1) Outline of RLM Operation

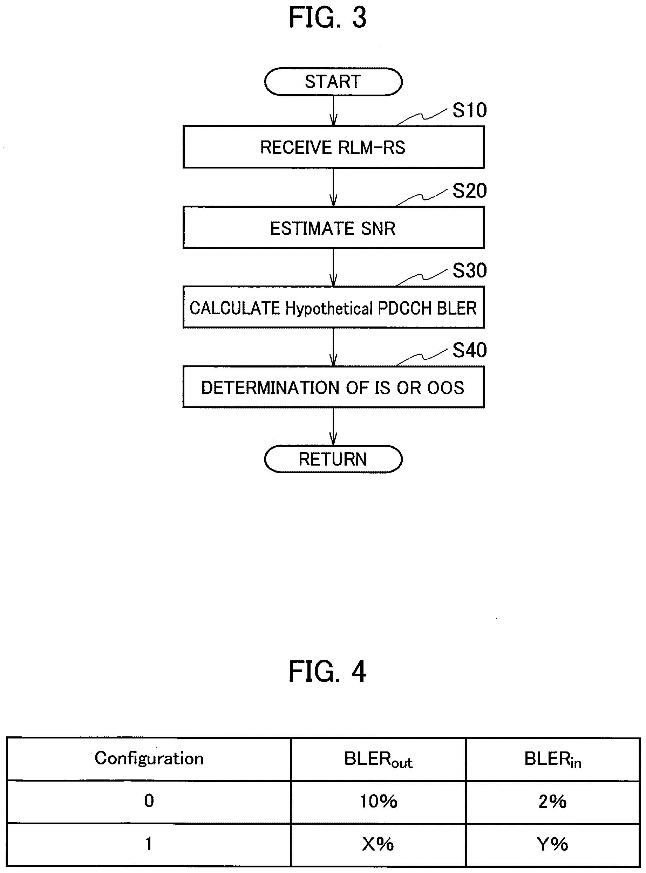

First, with reference to FIGS. 3 to 5, an outline of RLM operation performed by the UE 200 will be explained. FIG. 3 is a flowchart of a synchronous state determination operation of a radio link based on the RLM.

In the following explanation the SNR is taken as an example, however, Signal-to-Interference plus Noise power Ratio (SINR) can be used instead of the SNR.

As shown in FIG. 3, the UE 200 receives the RLM-RS (Step S10). The RLM-RS is periodically transmitted from the gNB 100 by using a predetermined radio resource.

The UE 200 estimates the Signal to Noise Ratio (SNR) of the gNB 100 (cell) by using the received RLM-RS (Step S20) .

Based on the estimated SNR, the UE 200 calculates a value of the BLER assumed when hypothetical Physical Downlink Control Channel (PDCCH) corresponding to the BLER pair notified by the signaling from the NG-RAN 20 side is used (Step S30). Note that, as explained above, two BLER pairs are used in the present embodiment.

The UE 200 compares the calculated value of the BLER with a value of a target BLER pair to determine whether the radio link is the OOS or the IS (Step S40).

FIG. 4 shows an exemplary configuration of the BLER pair. As shown in FIG. 4, two BLER pairs, specifically, the Configuration 0 and the Configuration 1, are used in the present embodiment.

The contents of the Configuration 0 are what are defined in 3GPP TS 38.133 v15.2.0 Section 8.1.1. The BLERₒᵤₜ (for determination of the OOS) is set to 10% and the BLERᵢₙ (for determination of the IS) is set to 2%.

The Configuration 1 is for the services such as the VoIP (Voice over IP), and the BLER that is higher (loose) than in the Configuration 0 is set. In FIG. 4, although BLERₒᵤₜ = x% and BLERᵢₙ = y% has been shown, x is set to a value larger than 10% and y is set to a value larger than 2% (for example, BLERₒᵤₜ = 15% and BLERᵢₙ = 3%). However, x and y are not necessarily larger than BLERₒᵤₜ and BLERᵢₙ of Configuration.

At a desired timing at least one of the Configuration 0 and the Configuration 1 can be set from the network (the NG-RAN 20 or the core network) in the UE 200 (network configurable). Specifically, the Configuration can be set from the network by signaling (message) including a predetermined information element (for example, RLM-IS-OOS-thresholdConfig) .

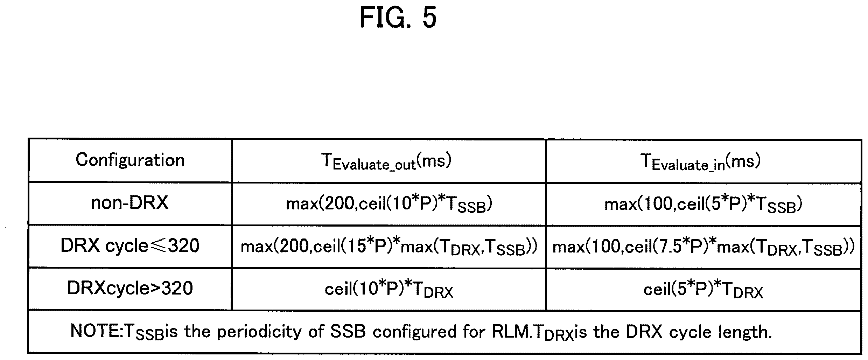

FIG. 5 shows an example of an evaluation period for determining whether it is the OOS or the IS. Specifically, FIG. 5 shows contents defined in 3GPP TS 38. 133 v15. 2. 0 Section 8.1.2. Note that, FIG. 5 shows the evaluation period in the case of SS/PBCH block (SSB)-based RLM.

As shown in FIG. 5, the evaluation period (T_{Evaluate_out} and T_{Evaluate_in}) is defined on the basis of measurements performed by using a plurality of samples. P is a coefficient considering the number of RSs that can actually be used in the RLM.

### (3.2) Example of RLM Operation when Changing BLER Pair

An example of the RLM operation performed by the UE 200 when changing the BLER pair will be explained below. Specifically, the RLM operation performed by the UE 200 when the BLER pair is changed during the evaluation period will be explained.

### (3.2.1) Operation Example 1

In the present operation example, if the targeted BLER pair (which may be simply the BLER pair or BLER threshold) is changed during the evaluation period for determining whether it is the OOS or the IS, the UE 200 can operate as below.

Specifically, the UE 200 does not change the currently applied evaluation period. That is, the UE 200 continues to apply the same evaluation period that was before the BLER pair was changed.

Alternatively, the UE 200 can apply an evaluation period that is different from the evaluation period that was before the BLER pair was changed. In this case, the different evaluation period can be designated by any of the following methods.
▪ specify the evaluation period to be applied by signaling from the network
▪ apply the evaluation period corresponding to the BLER pair after the change
▪ apply an evaluation period that is different from both of the evaluation periods corresponding to the BLER pair before and after the change (apply a new evaluation period for the case in which the BLER pair is changed during the evaluation period)

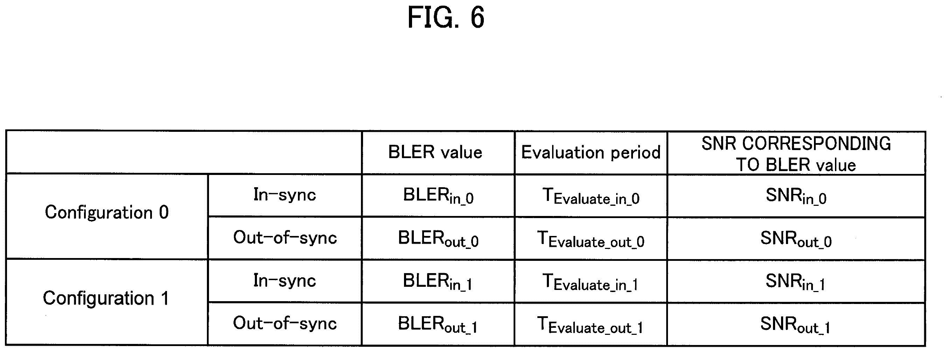

FIG. 6 shows an example of a notation of the configuration (BLER pair), the BLER corresponding to OOS/IS, the evaluation period, and the SNR.

The UE 200 applies the evaluation period corresponding to the BLER pair (configuration) after the change.

More specifically, when the configuration is changed from the Configuration 0 to the Configuration 1, the UE 200 applies T_{Evaluate_in_1} as the evaluation period for the IS and applies T_{Evaluate-out-1} as the evaluation period for the OOS. In addition, SNR_{in_1} and SNR_{out_1} are associated with BLER_{in_1} and BLER_{out_1}.

On the other hand, when the configuration is changed from the Configuration 1 to the Configuration 0, the UE 200 applies T_{Evaluate_in_0} as the evaluation period for the IS, and applies T_{Evaluate_out_0} as the evaluation period for the OOS.

### (3.2.2) Operation Example 2

In this operation example, even if the BLER pair is changed, the UE 200 continues the measurement operation for determining whether it is the OOS or the IS without distinguishing the BLER measurement operation before and after the BLER pair has been changed.

More specifically, when changing the BLER pair, if the measurement corresponding to the evaluation period after the change has not been performed, the UE 200 can continue the measurement operation until the evaluation period after the change expires.

Alternatively, when changing the BLER pair, if the measurement corresponding to the evaluation period after the change has been performed already, and if the determination condition for the OOS or the IS for the value of BLER after the change has been satisfied, the UE 200 can operate according to any of the following manners.
▪ after the BLER pair has been changed, promptly notify the upper layer of the synchronous state indication (indication)
▪ after the BLER pair has been changed, notify the upper layer of the synchronous state indication (indication) after elapse of a predetermined grace period

The predetermined grace period is preferably a fixed value shorter than RLM-RS cycle or an integral multiple of the RLM-RS cycle.

A specific RLM operation performed by the UE 200 based on this operation example will be explained below.

### (3.2.2.1) Operation Example 2-1

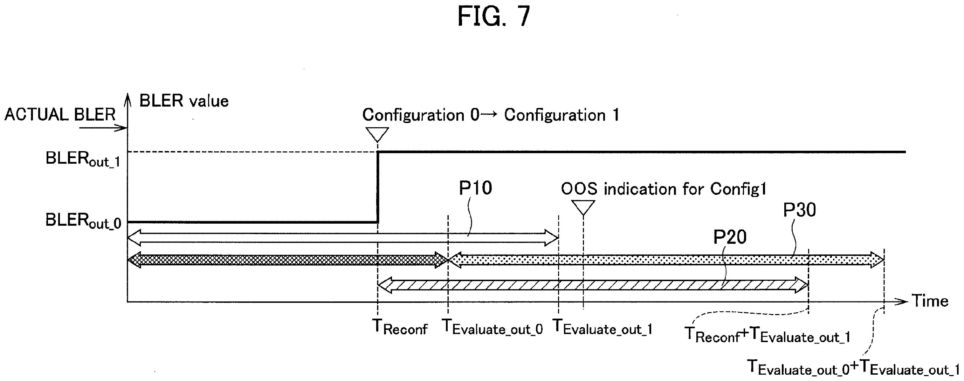

FIG. 7 shows RLM operation sequence (Operation Example 2-1) performed by the UE 200. FIG. 7 shows the RLM operation sequence when the configuration (BLER pair, see FIG. 6) is changed from the Configuration 0 to the Configuration 1.

Specifically, at a timing T_{Reconf}, the configuration is changed from the Configuration 0 to the Configuration 1. That is, the T_{Reconf} is the timing at which the BLER pair is changed by the RRC Reconfiguration or the like. In this operation example, the BLER (actual BLER) estimated by using the hypothetical PDCCH of the UE 200 is higher than the BLER_{out_1} both before and after the change of the BLER pair.

At the T_{Reconf}, the UE 200 continues the measurement operation being performed even when the BLER pair is changed from the Configuration 0 to the Configuration 1 (P10).

Thereafter, when the timing T_{Evaluate_out_1} corresponding to the Configuration 1 is reached, the UE 200 notifies the upper layer of OOS indication based on the Configuration 1. As explained above, the actual BLER is higher than the BLER_{out_1} and it is determined to be the OOS based on the Configuration 1.

Note that, for the sake of comparison, after the T_{Reconf}, a measurement operation sequence when a transition is made immediately to the measurement based on the evaluation period corresponding to the Configuration 1 (P20), and a measurement operation sequence when a transition is made after the elapse of the T_{Evaluate_out_0} to the measurement based on the evaluation period corresponding to the Configuration 1 (P30) are shown in FIG. 7.

As shown in FIG. 7, in comparison with P10, in the sequences P20 and P30, a longer time is required until the evaluation period expires, that is, until it is determined to be the OOS. Specifically, in the case of P20, it is determined to be the OOS after the elapse of the T_{Evaluate_out_1} from the T_{Reconf}, and in the case of P30, it is determined to be the OOS after the elapse of the total time obtained by adding the T_{Evaluate_out_0} and the T_{Evaluate}__{out_1}.

### (3.2.2.2) Operation Example 2-2

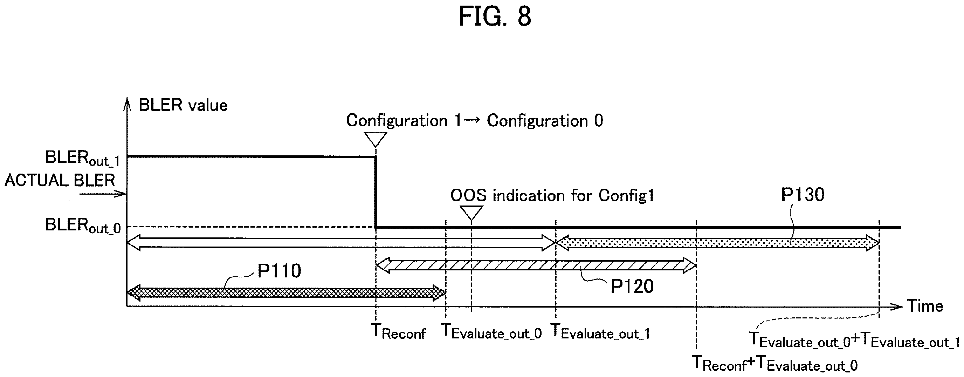

FIG. 8 shows another RLM operation sequence (Operation Example 2-2) performed by the UE 200. Mainly the operations that are different from Operation Example 2-1 will be explained below. FIG. 8 shows the RLM operation sequence when the configuration (BLER pair) is changed from the Configuration 1 to the Configuration 0. In this operation example, the actual BLER is intermediate between BLER_{out_0} and the BLER_{out_1}.

At the T_{Reconf}, the UE 200 continues the measurement operation being performed even when the BLER pair is changed from the Configuration 1 to the Configuration 0 (P110).

Thereafter, when the timing T_{Evaluate_out_0} corresponding to the Configuration 0 is reached, the UE 200 notifies the upper layer of the OOS indication based on the Configuration 0.

Note that, for the sake of comparison, after the T_{Reconf}, a measurement operation sequence when a transition is made immediately to the measurement based on the evaluation period corresponding to the Configuration 0 (P120), and a measurement operation sequence when a transition is made after the elapse of the T_{Evaluate_out_1} to the measurement based on the evaluation period corresponding to the Configuration 0 (P130) are shown in FIG. 8.

As shown in FIG. 8, in comparison with P110, in the sequences P120 and P130, a longer time is required until the evaluation period expires, that is, until it is determined to be the OOS. Specifically, in the case of P120, it is determined to be the OOS after the elapse of the T_{Eevaluate_out_0} from the T_{Reconf}, and in the case of P130, it is determined to be the OOS after the elapse of the total time obtained by adding the T_{Evaluate_out_0} and the T_{Evaluate_out_1}.

### (3.2.2.3) Operation Example 2-3

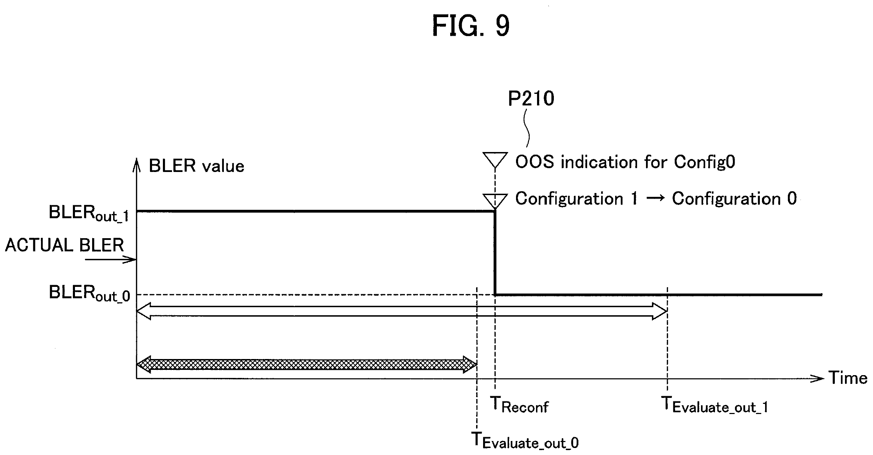

FIG. 9 shows still another RLM operation sequence (Operation Example 2-3) performed by the UE 200. FIG. 9 shows the RLM operation sequence when the configuration (BLER pair) is changed from the Configuration 1 to the Configuration 0. In this operation example as well, the actual BLER is intermediate between the BLER_{out_0} and the BLER_{out_1}.

At the T_{Reconf}, when it is determined by the measurement performed before the change of the configuration that the evaluation period corresponding to the configuration after the change expires and the determination condition for the OOS is satisfied, the UE 200 immediately notifies the upper layer of the OOS indication (P210).

As a result, after the T_{Reconf}, because there is no need to perform the new measurement based on the evaluation period corresponding to the Configuration 0, the time until it is determined to be the OOS is shortened.

### (3.2.2.4) Operation Example 2-4

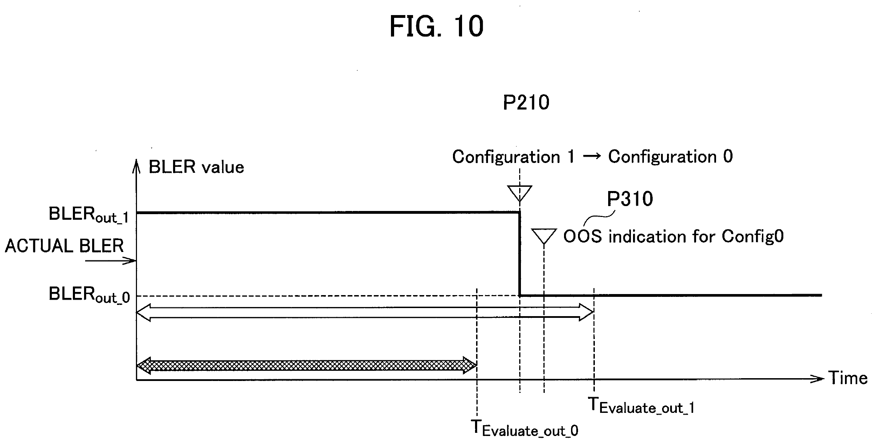

FIG. 10 shows still another RLM operation sequence (Operation Example 2-4) performed by the UE 200. FIG. 10 shows, like in Operation Example 2-3, the RLM operation sequence when the configuration (BLER pair) is changed from the Configuration 1 to the Configuration 0. In this operation example as well, the actual BLER is intermediate between the BLER_{out_0} and the BLER_{out_1}.

At the T_{Reconf}, when it is determined by the measurement performed before the change of the configuration that the evaluation period corresponding to the configuration after the change expires and the determination condition for the OOS is satisfied, the UE 200 notifies the upper layer of the OOS indication after elapse of the predetermined grace period (P310).

As a result, like in Operation Example 2-3, after the T_{Reconf}, because there is no need to perform the new measurement based on the evaluation period corresponding to the Configuration 0, the time until it is determined to be the OOS is shortened. Furthermore, because the predetermined grace period has been prepared, the UE 200 can notify the upper layer of the OOS indication at an appropriate timing within the grace period, which can contribute to a reduction in the processing load.

### (3.2.3) Operation Example 3

In this operation example, if the BLER pair is changed after expiration of the evaluation period for determining whether it is the OOS or the IS but before notification of synchronous state indication (OOS or IS indication, hereinafter, "OOS/IS indication") to the upper layer, the UE 200 can operate as below.

Specifically, the UE 200 unconditionally stops the notification (notification of the synchronous state of the radio link) of the OOS/IS indication to the upper layer.

Alternatively, the UE 200 can set a period during which the notification of the OOS/IS indication to the upper layer cannot be made after the BLER pair is changed. That is, the UE 200 does not notify the OOS/IS indication within a predetermined period after the BLER pair has been changed. In this case, the OOS/IS indication generated within the predetermined period can be notified or discarded after the predetermined period has elapsed.

The UE 200 can set a condition for canceling the notification of the OOS/IS indication and can cancel only the notification of the OOS/IS indication matching this condition.

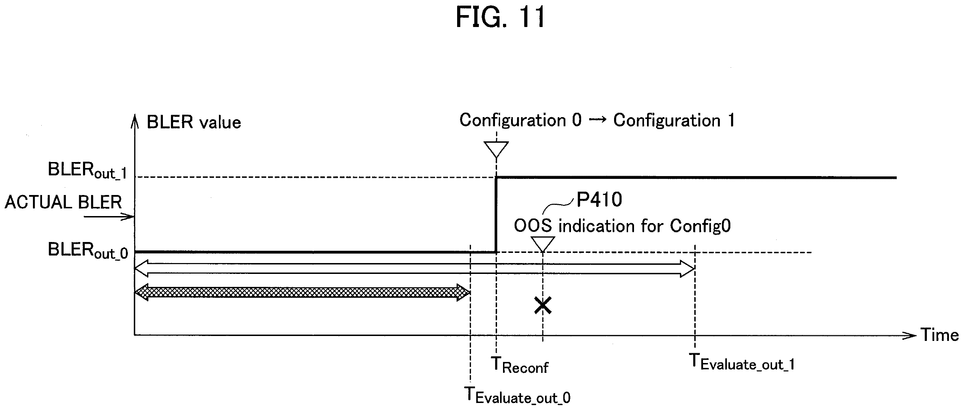

FIG. 11 shows still another RLM operation sequence (Operation Example 3) performed by the UE 200. FIG. 11 shows the RLM operation sequence when the configuration (BLER pair) is changed from the Configuration 0 to the Configuration 1. In this operation example as well, the actual BLER is intermediate between the BLER_{out_0} and the BLER_{out_1}.

When the BLER pair is changed after expiration of the T_{Evaluate_out_0} before the change but before the notification of the OOS indication to the upper layer, the UE 200 stops the notification of the OOS indication (P410).

Accordingly, it is possible to prevent the upper layer from being notified of the OOS indication determined based on the BLER_{out_0} corresponding to the Configuration 0 before the change.

### (4) Advantageous Effects

As explained above, according to the present embodiment, it is possible to appropriately define the operation of the UE 200 when changing the configuration of the RLM, more specifically, the determination standard of the OOS and the IS. As a result, degradation of the quality evaluation performance of the radio link due to too short or too long measurement time, that is, quality monitoring time of the radio link, can be prevented.

More specifically, the operation of the UE 200 when the targeted BLER pair is changed during the evaluation period of the RLM by the RRC Reconfiguration or the like is not prescribed in the conventional technology.

The contents of the evaluation period are likely to differ for each corresponding BLER pair. Specifically, this is because, the evaluation period for determining the OOS/IS, when assuming measurement at a certain SNR, is prescribed as the number of measurement samples necessary for the measurement error to fall within a certain level (e.g. +/-2.5 dB) . Furthermore, since it is considered that different SNR values correspond to different BLER pairs, the value of the BLER for determining the OOS/IS is different, and the value of the SNR to be assumed and the number of samples necessary for measurement also differ.

Therefore, even if the BLER pair is changed during the evaluation period, it is necessary to apply appropriate provisions to the UE.

For example, after the BLER pair is changed during the evaluation period, if the RLM operation is performed again from the timing (T_{Reconf}) of the RRC Reconfiguration, the quality monitoring time (evaluating time) of the radio link becomes longer, and the quality evaluation performance of the radio link degrades. Specifically, it takes a long time for the UE to detect a radio link failure (RLF) even in an environment in which communication is originally impossible, and a useless connection is maintained.

Although estimation of the SNR by using the RLM-RS is considered to be common to the UE regardless of the BLER pair (and Hypothetical PDCCH parameter for BLER calculation) to be set, there is no provision that takes this into account, and also no other provision can be used.

The UE 200 according to the present embodiment can solve this problem. For example, even if the BLER pair is changed (changed from the first error rate control information to the second error rate control information) during the evaluation period, the UE 200 can apply the evaluation period corresponding to the BLER pair (first error rate control information) before the change.

Furthermore, for example, when the BLER pair is changed (changed from the first error rate control information to the second error rate control information) during the evaluation period, the UE 200 can apply the evaluation period corresponding to the BLER pair (second error rate control information) after the change.

By the operation of the UE 200 as described above, it is possible to prevent that the quality monitoring time of the radio link becomes too short or too long depending on the timing at which the BLER pair is changed, that is, the relationship between the timing of the RRC Reconfiguration (T_{Reconf}) and the duration of the evaluation period.

With the UE 200, even if a plurality of BLER pairs that determines the synchronous state of the radio link is dynamically changed during the operation, specifically, changed during the evaluation period of the RLM, it is possible to maintain the quality evaluation performance of the radio link.

Furthermore, for example, if the BLER pair is changed during the evaluation period, the UE 200 can cancel the notification of the synchronous state (OOS/IS indication) of the radio link. Therefore, it is possible to prevent the upper layer from being notified of the OOS/IS indication determined based on the BLER pair before the change.

With the UE 200, because the notification of the non-latest OOS/IS indication is prevented, it is possible to contribute to the maintaining of the radio link quality evaluation performance.

Furthermore, in the present embodiment, when the BLER pair is changed within a predetermined timing, specifically, the evaluation period corresponding to the BLER pair (first error rate control information) before the change, the UE 200 performs the above-mentioned operation. In other words, the radio link quality evaluation performance can be maintained while utilizing the measurement result (the quality evaluation result of the radio link) in the evaluation period corresponding to the BLER pair before the change.

### (5) Other Embodiments

Although the contents of the present invention have been described by way of the embodiments, it is obvious to those skilled in the art that the present invention is not limited to what is written here and that various modifications and improvements thereof are possible.

For example, the UE 200 can apply the same operation regardless of whether SS/PBCH block (SSB) , CSI-RS, or a mixture of the SSB and the CSI-RS is used as the RLM-RS used for the RLM, or can apply different operations for each type of the RLM-RS to be used.

In a part of the above-described embodiment, an example in which the Configuration 0 corresponds to the first error rate control information and the Configuration 1 corresponds to the second error rate control information is explained. However, as mentioned in Operation Examples 1 to 3, the Configuration 1 can correspond to the first error rate control information and the Configuration 0 can correspond to the second error rate control information. That is, the case of changing the configuration from the Configuration 1 to the Configuration 0 is also included in the embodiment.

Furthermore, the above-described embodiment relates to an example in which two BLER pairs are used; however, three or more BLER pairs can be used. That is, Configuration N (where N is an integer other than 0,1, and can comprehensively represent a plurality of integers other than 0 and 1 with one integer), other than the Configuration 0 and the Configuration 1, can be additionally used.

Moreover, the block diagram used for explaining the embodiments (FIG. 2) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

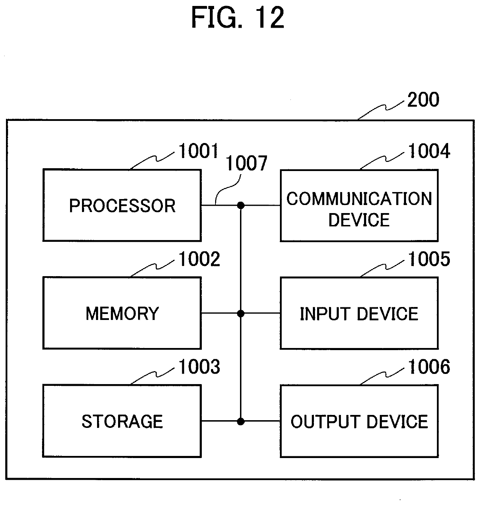

Furthermore, the UE 200 explained above can function as a computer that performs the processing of the radio communication method of the present disclosure. FIG. 12 is a diagram showing an example of a hardware configuration of the UE 200. As shown in FIG. 12, the device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the device can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the device by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802. 11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like) . In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising" . Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

In the present disclosure, the term "A and B are different" may mean "A and B are different from each other". It should be noted that the term may mean "A and B are each different from C". Terms such as "leave", "coupled", or the like may also be interpreted in the same manner as "different" .

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### EXPLANATION OF REFERENCE NUMERALS

- 10: radio communication system
- 20: NG-RAN
- 100: gNB
- 200: UE
- 210: transmitting unit
- 220: receiving unit
- 230: control unit
- 1001: processor
- 1002: memory
- 1003: storage
- 1004: communication device
- 1005: input device
- 1006: output device
- 1007: bus

## Claims

1. A user equipment comprising:
a receiving unit that receives a reference signal; and
a control unit that performs quality monitoring of a radio link based on the reference signal, wherein the control unit
determines a synchronous state of the radio link based on first error rate control information or second error rate control information, and
even if the first error rate control information is changed to the second error rate control information at a predetermined timing, applies an evaluation period corresponding to the first error rate control information.

2. A user equipment comprising:
a receiving unit that receives a predetermined reference signal; and
a control unit that performs quality monitoring of a radio link based on the reference signal, wherein the control unit
determines a synchronous state of the radio link based on first error rate control information or second error rate control information, and
when the first error rate control information is changed to the second error rate control information at a predetermined timing, applies an evaluation period corresponding to the second error rate control information.

3. A user equipment comprising:
a receiving unit that receives a predetermined reference signal; and
a control unit that performs quality monitoring of a radio link based on the reference signal, wherein the control unit
determines a synchronous state of the radio link based on first error rate control information or second error rate control information, and
when the first error rate control information is changed to the second error rate control information at a predetermined timing, cancels a notification of the synchronous state of the radio link.

4. The use equipment as claimed in any one of claims 1 to 3, wherein the predetermined timing is within an evaluation period corresponding to the first error rate control information.
